# EUROPEAN PATENT SPECIFICATION

(11) **EP 4 439 805 B1**
(45) Date of publication and mention of the grant of the patent: **04.11.2026**
(21) Application number: 23863424.0
(22) Date of filing: 04.09.2023
(51) Int. Cl.: H01M 10/613, H01M 10/656, H01M 10/658, H01M 10/6555, H01M 50/204, H01M 50/258, H01M 50/293

(54) **BATTERY PACK HAVING STRUCTURE FOR DELAYING HEAT PROPAGATION**
BATTERIEPACK MIT STRUKTUR ZUR VERZÖGERUNG DER WÄRMEAUSBREITUNG
BLOC-BATTERIE AYANT UNE STRUCTURE POUR RETARDER LA PROPAGATION DE CHALEUR

(30) Priority: 07.09.2022 KR 20220113165
(43) Date of publication of application: 02.10.2024
(73) Proprietor: LG Energy Solution, Ltd., Seoul 07335 (KR)
(72) Inventor: JANG, Byung Do, Daejeon 34122 (KR); SHIN, Ju Hwan, Daejeon 34122 (KR); LEE, Jae Hyun, Daejeon 34122 (KR); LEE, Hyoung Suk, Daejeon 34122 (KR)
(74) Representative: Plasseraud IP
(86) International application number: PCT/KR2023/013120
(87) International publication number: WO 2024/053949

(56) References cited:
- EP-A1- 4 239 759
- CN-A- 113 422 139
- CN-A- 113 422 139
- CN-A- 114 122 592
- CN-U- 211 629 192
- CN-U- 215 342 831
- JP-A- 2019 125 449
- KR-B1- 102 065 099

## Description

### [Technical Field]

The present invention relates to a battery pack that can delay thermal propagation between battery modules stored in a battery pack.

### [Background Art]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a chargeable/dischargeable power generator consisting of a laminated structure of electrodes and separators.

Since secondary batteries are required for continuous use over a long period, it is necessary to effectively control the heat generated during the charging and discharging process. If the cooling of the secondary battery is not carried out smoothly, the temperature rise can lead to an increase in current, and the increase in current can in turn cause a chain reaction of positive feedback, leading to a state of thermal runaway.

Furthermore, when secondary batteries are grouped together in the form of modules or packs, thermal propagation occurs where heat generated in one secondary battery causes the surrounding secondary batteries to overheat successively. Moreover, the risk of fire is high due to flammable gasses released from overheated secondary batteries and ignition sources such as heated electrodes, hence there is a need to suppress such ignition risks.

EP 4 239 759 and CN 215 342 831 disclose a battery pack. CN 113 422 139 discloses a battery assembly.

### [Prior Art Documents]

(Patent Document 001) Korean Patent Publication No. 2022-0017741(published on February 21, 2022)

### [Description of the Invention]

### [Technical Problem]

The present invention aims to provide a battery pack that can effectively suppress and prevent the phenomenon of thermal propagation in which heat transfer caused by thermal runaway generated by any secondary battery in a battery pack spreads to other secondary batteries or battery modules in the vicinity.

However, the technical problems to be solved by the present invention are not limited to the above-described problem, and other problems not mentioned can be clearly understood by those skilled in the art from the following description of the present invention.

### [Technical Solution]

The present invention relates to a pack case including a cooling plate equipped with a cooling flow path on the inside; a side plate coupled to form a side wall at the edge of the cooling plate; a center frame coupled to the cooling plate to longitudinally divide the storing space formed by the side plate; and a side beam coupled to the cooling plate to transversely divide a plurality of spaces divided by the center frame, wherein the cooling plate is provided with a slot formed by penetrating along the coupling position of the center frame or side beam.

According to the invention, a plurality of the slots is spaced apart along the coupling position of the center frame or side beam.
In addition, the slot may be formed of a size that does not extend beyond the center frame and side beam.

A fastening point of the center frame or side beam may be formed between the mutually spaced slots.

The fastening point may be distributed at both ends and in the middle of the plurality of slots forming a row.

In addition, the cooling plate is characterized in that the cooling flow path and the slot may not overlap or intersect.

An insulating material is filled within the space formed by the slot. The insulating material may be a watertight material.

In addition, the pack case may further include a base plate coupled to the bottom surface of the cooling plate.

The base plate may be provided with a base slot corresponding to the slot formed in the cooling plate.

Meanwhile, the present invention provides a battery pack including: the pack case; and a battery module accommodated in each storing space divided longitudinally and transversely by the center frame and side beam of the pack case.

In the battery pack of the present invention, a conductive heat transfer through the cooling plate between battery modules having the center frame or side beam in between is delayed by the slot.

In addition, a thermal resin layer may be interposed at the contact surface between the battery module and the cooling plate, and it may be preferable that the thermal resin layer does not encroach upon the slot.

### [Advantageous Effects]

The pack case and battery pack of the present invention, with the aforementioned configuration, have the advantage of enhanced safety, as part of the heat conduction path between battery modules through the cooling plate is eliminated by the penetrated slot, excessive heat transfer caused by the battery module experiencing thermal runaway is suppressed and delayed, and the safety of the battery pack is improved.

However, the technical effects that can be obtained through this invention are not limited to those described above, and other effects not mentioned will be apparent to one of ordinary skill in the art from the following description of the invention.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings.
FIG. 1 is a drawing illustrating the overall configuration of a pack case according to the present invention.
FIG. 2 is an exploded perspective view of a pack case according to the present invention.
FIG. 3 is a drawing illustrating a cooling plate.
FIG. 4 is a drawing illustrating a battery pack according to the present invention.
FIG. 5 is a drawing illustrating another exemplary embodiment of the battery pack of FIG. 4.
FIG. 6 is a cross-sectional view illustrating another exemplary embodiment of the battery pack of FIG. 4.
FIG. 7 is a drawing illustrating heat transfer delay structure by a slot formed in a cooling plate.

### [Best Mode]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a pack case capable of mounting a plurality of battery modules. In one example, the pack case includes a cooling plate equipped with a cooling flow path on the inside, a side plate coupled to form a side wall at the edge of the cooling plate, a center frame coupled to the cooling plate to longitudinally divide the storing space formed by the side plate, and a side beam coupled to the cooling plate to transversely divide a plurality of spaces divided by the center frame.

Here, the cooling plate is provided with a slot formed by penetrating along the coupling position of the center frame or side beam.

In the pack case of the present invention with such a configuration, the conductive heat transfer through the cooling plate between the battery modules with the center frame or the side beam in between is delayed by the slots. That is, part of the heat transfer path between the battery modules through the cooling plate is eliminated by the slots, so that the excessive heat transfer caused by the battery modules experiencing thermal runaway is suppressed and delayed, thereby improving the safety of the battery pack.

### [Mode for Invention]

Hereinafter, a detailed description will be given of specific embodiments of the secondary battery of the present invention with reference to the attached drawings. For reference, the relative positions specified in the directions of front and back, up and down, and left and right used in the following description are intended to aid in understanding the invention, and unless specially defined, are based on the directions shown in the drawings.

### [First embodiment]

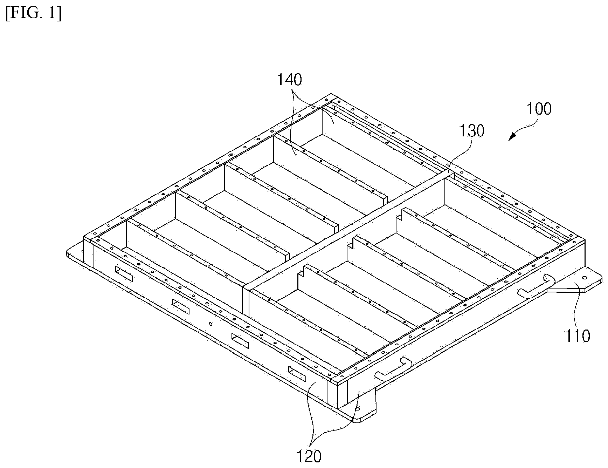

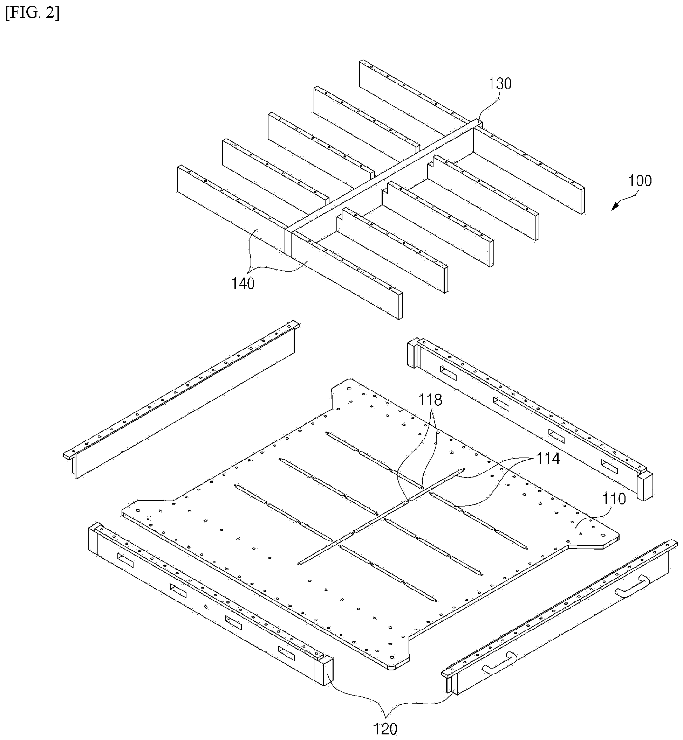

FIG. 1 is a drawing illustrating the overall configuration of a pack case 100 according to the present invention, and FIG. 2 is an exploded perspective view of the pack case 100 according to the present invention.

The present invention relates to a pack case 100 for storing a plurality of battery modules 200. Referring to FIG. 1 and FIG. 2, the pack case 100 of the present invention includes a cooling plate 110, a side plate 120, a center frame 130, and a side beam 140.

The cooling plate 110 forms the bottom of the pack case 100 and supports the load of the mounted battery modules 200. Additionally, the cooling plate 110 plays a crucial role in absorbing and cooling the heat from the battery module 200, as it widely contacts the entire bottom of the battery module 200. For this purpose, the cooling plate 110 may be made of a material with good thermal conductivity, for example, an aluminum alloy material, and has a cooling flow path 112 inside it for effective cooling. A heat transfer medium, such as coolant, is circulated through the cooling flow path 112, and the heat transfer medium absorbs heat generated by the battery module 200 and dissipates it to the outside to maintain the temperature of the battery module 200 at a reasonable level.

The side plate 120 refers to a plate member that is coupled to form a side wall at the edges of the cooling plate 110. The side plate 120 compartmentalizes the interior and exterior of the pack case 100, and the space for safely storing the battery module 200 is created by the cooling plate 110 and side plate 120.

The center frame 130 is a member coupled to the cooling plate 110 to longitudinally divide the storing space formed by the side plate 120, and the side beam 140 is a member coupled to the cooling plate 110 to transversely divide the plurality of spaces divided by the center frame 130. The lattice structure formed by the center frame 130 and side beam 140 enhances the structural rigidity of the pack case 100 and also creates a plurality of individual storing spaces where each battery module 200 can be separately stored. In the illustrated embodiment, a total of eight individual storing spaces are provided by one center frame 130 and ten side beams 140, allowing the illustrated pack case 100 to mount eight battery modules 200.

As mentioned earlier, since the cooling plate 110 absorbs and cools heat through the bottom of the battery module 200, it is desirable for the cooling plate 110 to be made of a material with excellent thermal conductivity for effective heat transfer. However, while the cooling plate 110 with high thermal conductivity is effective in controlling the temperature of the battery module 200 under normal operation, there is a drawback that if thermal runaway occurs in any battery module 200, the excess heat rapidly spreads to other battery modules 200 through the cooling plate 110.

In order to delay the heat transfer in the event of thermal runaway, the present invention configures the cooling plate 110 to be equipped with a slot 114 formed by penetrating along the coupling position of the center frame 130 or side beam 140. The center frame 130 and side beam 140 form boundaries between adjacent battery modules 200, and conductive heat transfer through the cooling plate 110 between battery modules 200 with the center frame 130 or side beam 140 in between is delayed by the slot 114. That is, part of the heat conduction path between the battery modules 200 through the cooling plate 110 is removed by the slot 114 formed by penetrating the cooling plate, reducing and delaying excessive heat transfer caused by a battery module 200 experiencing thermal runaway, thereby enhancing the safety of the battery pack 10.

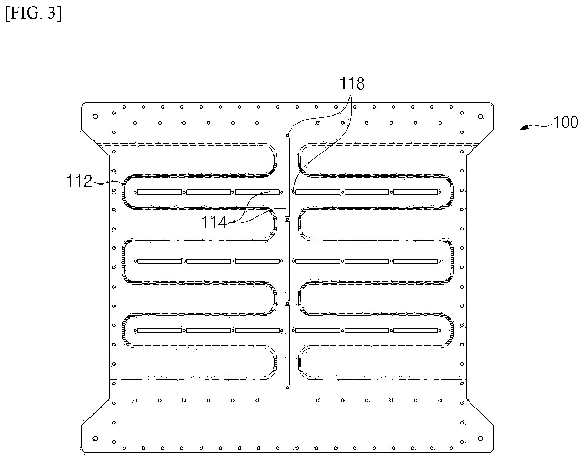

FIG. 3 is a drawing illustrating the cooling plate 110, where in the illustrated embodiment, a plurality of slots 114 are formed on the cooling plate 110 and are spaced apart along the coupling position of the center frame 130 or side beam 140. The slot 114 can be formed along at least one of the coupling positions of the center frame 130 and side beam 140, and in the illustrated embodiment, they are formed at each coupling position of both the center frame 130 and side beam 140. Furthermore, each of the slot 114 is formed to a size that does not expose them beyond the center frame 130 and side beam 140. In other words, the width of the slot 114 is formed to be smaller than the thickness of the center frame 130 and side beam 140.

In the illustrated embodiment, the slot 114 is formed in a narrow, elongated shape. This shape of the slot 114 is considered to reduce the heat conduction through the cooling plate 110 without significantly compromising the structural rigidity and thermal capacity of the cooling plate 110, and the slot 114 can be provided in various shapes to meet this purpose depending on the embodiment.

Referring to FIG. 1 through FIG. 3, a plurality of slots 114 is dispersed in a row, with a fastening point 118 of the center frame 130 or side beam 140 formed in the spaces between the mutually spaced slots 114. The fastening point 118 refers to the point where the center frame 130 and side beams 140 are fixed to the cooling plate 110. Various known fastening structures can be applied to the fixing structure applied to the fastening point 118. For example, fastening methods such as bolting, forced fit with pins, welding, etc., can be applied.

Here, the fastening point 118 of the center frame 130 and side beam 140 are distributed at both ends and in the middle of the plurality of slots 114 forming a row. By avoiding the slots 114 and distributing the fastening points 118 widely and evenly, the center frame 130 and side beam 140 can be securely fixed.

In addition, since the slot 114 is formed by penetrating the cooling plate 110 as a cooling flow path 112 is equipped inside the cooling plate 110, it is preferable to arrange the cooling flow path 112 and the slot 114 so that they do not overlap or intersect. This is considering the fact that preventing any leaked coolant from flowing out to the battery module 200 through the slot 114 and minimizing the heat transfer path around the slot 114 are advantageous in terms of delaying heat transfer.

### [Second embodiment]

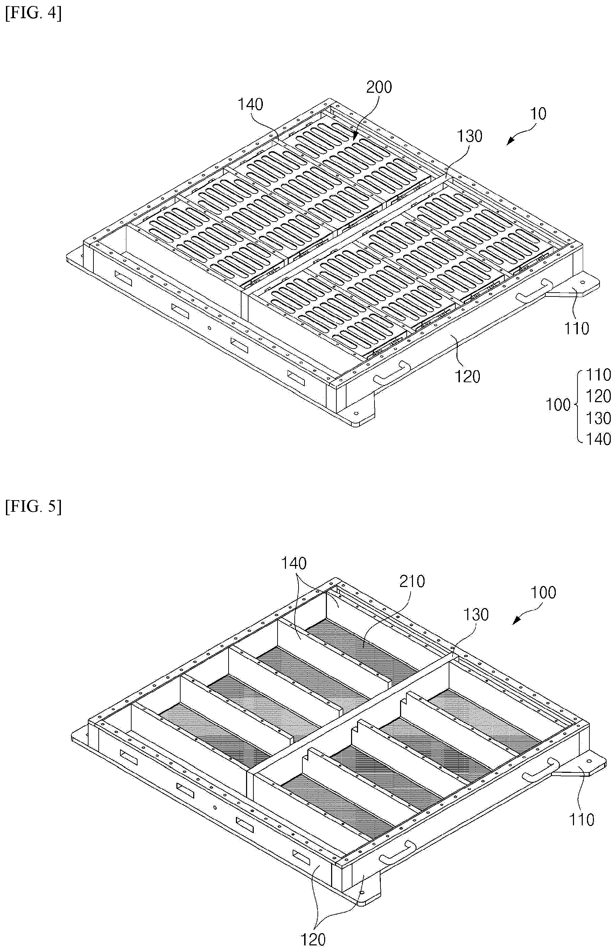

FIG. 4 is a drawing illustrating a battery pack 10 according to the present invention. The battery pack 10 provided by the present invention includes the pack case 100 described in the first embodiment, and the battery module 200 accommodated in each storing space divided longitudinally and transversely by the center frame 130 and side beam 140 of the pack case 100. In the illustrated embodiment, a total of eight battery modules 200 are gathered to form a single battery pack 10.

FIG. 5 is a drawing illustrating another exemplary embodiment of the battery pack 10 of FIG. 4. In the embodiment of FIG. 5, a thermal resin layer 210 is interposed in the contact surface between the battery module 200 and the cooling plate 110. The thermal resin layer 210 serves to mediate the transfer of heat from the battery module 200 to the cooling plate 110. For this purpose, the material forming the thermal resin layer 210 needs to be a resin material with excellent thermal conductivity. Furthermore, the thermal resin layer 210 is preferably formed with a thickness that is optimal for heat conduction while filling in micro-unevenness present on the contact surface between the battery module 200 and the cooling plate 110.

Furthermore, the thermal resin layer 210 is preferably formed to the extent that it does not encroach on the slot 114. This is because the role of the slot 114 is to shrink and limit the heat conduction path between the battery modules 200, so if the thermal resin layer 210 is formed over the slot 114, the original role of the slot 114 is adversely affected.

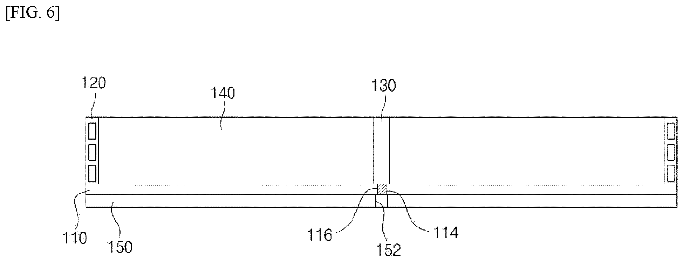

FIG. 6 is a cross-sectional view illustrating another exemplary embodiment of the battery pack 10 of FIG. 4. Referring to FIG. 6, an insulating material 116 is filled within the space created by the slot 114. The effectiveness of the slot 114 in blocking heat transfer can be enhanced by filling the slot 114 with an insulating material 116 that has a lower thermal conductivity than air. Furthermore, by configuring the insulating material 116 as a watertight material, the insulating material 116 can more effectively block coolant that may leak from the cooling flow path 112, and it may also be desirable to fill the insulating material 116 with a flame retardant material in the slot 114 in case a fire occurs inside the battery pack 10.

And, as shown in FIG. 6, the battery pack 10 may further include a base plate 150 that couples to the bottom surface of the cooling plate 110. The base plate 150 serves to add structural rigidity to the bottom surface of the battery pack 10 and to protect the cooling plate 110 provided with the cooling flow path 112.

Depending on the embodiment, the base plate 150 may include a base slot 152 corresponding to a slot 114 formed in the cooling plate 110. That is, the base slot 152 and the slot 114 of the cooling plate 110 are aligned to overlap upwardly and downwardly, and heat from the cooling plate 110 may be discharged to the outside through the base slot 152.

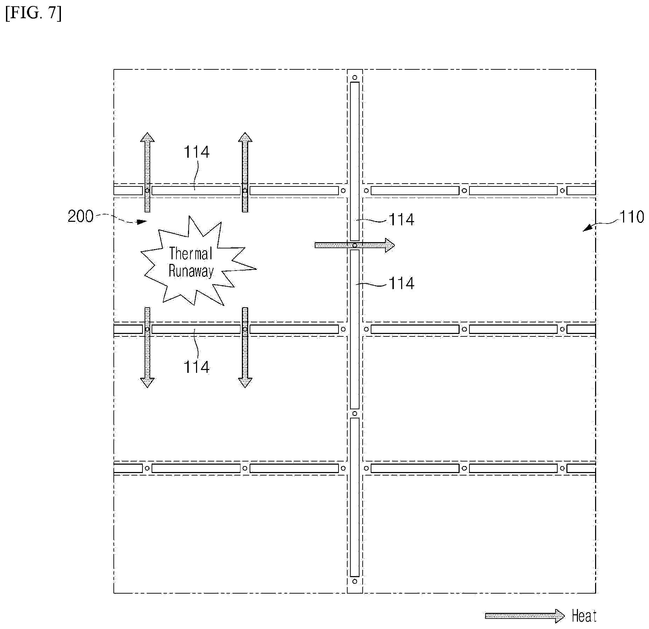

FIG. 7 is a drawing illustrating heat transfer delay structure by a slot 114 formed in the cooling plate 110. A slot 114 penetrating through the cooling plate 110 is disposed along the coupling position of the center frame 130 and side beam 140. Since the center frame 130 and side beam 140 form a boundary between adjacent battery modules 200, the slots 114 formed along the boundary between the battery modules 200 serve to remove a portion of the heat conduction path between the battery modules 200 through the cooling plate 110. Accordingly, conduction heat transfer between the battery modules 200 on either side of the center frame 130 and/or the side beam 140 is significantly delayed by the slots 114, thereby improving the safety of the battery pack 10 by reducing and delaying excessive heat transfer to the surrounding area caused by a battery module 200 that has experienced thermal runaway.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various modifications that may replace them at the time of filing the present application, said modifications being considered part of the present invention if they do not contradict the appended claims, i.e. if they comprise at least all features of appended claim 1.

**[Reference numerals]**

| | | | | | |
|---|---|---|---|---|---|
| 10: | BATTERY PACK | | | 100: | PACK CASE |
| 110: | COOLING PLATE | | | 112: | COOLING FLOW PATH |
| 114: | SLOT | 116: | INSULATING MATERIAL | 118: | FASTENING POINT |
| 120: | SIDE PLATE | | | 130: | CENTER FRAME |
| 140: | SIDE BEAM | | | 150: | BASE PLATE |
| 152: | BASE SLOT | | 200: | BATTERY MODULE | |
| 210: | THERMAL RESIN LAYER | | | | |

## Claims

1. A pack case (100) comprising:
a cooling plate (110) equipped with a cooling flow path (112) on the inside;
a side plate (120) coupled to form a side wall at the edge of the cooling plate (110);
a center frame (130) coupled to the cooling plate (110) to longitudinally divide a storing space formed by the side plate (120); and
a side beam (140) coupled to the cooling plate (110) to transversely divide a plurality of spaces divided by the center frame (130), wherein
the cooling plate (110) is provided with a slot (114) formed by penetrating along the coupling position of the center frame (130) or side beam (140),
wherein a plurality of the slots (114) is spaced apart along the coupling position of the center frame (130) or side beam (140),
**characterized in that** an insulating material (116) is filled within the space formed by each slot (114).

2. The pack case (100) of claim 1, wherein
the slot (114) is formed by penetrating along the coupling position of the center frame (130) and side beam (140).

3. The pack case (100) of claim 1, wherein
the slot (114) is not exposed outside the center frame (130) and side beam (140).

4. The pack case (100) of claim 1, wherein
the cooling plate (110) is **characterized in that** the cooling flow path (112) and the slot (114) do not overlap or intersect.

5. The pack case (100) of claim 1, wherein
the insulating material (116) is a watertight material.

6. The pack case (100) of claim 1, further comprising:
a base plate (150) coupled to the bottom surface of the cooling plate (110).

7. The pack case (100) of claim 6, wherein
the base plate (150) is provided with a base slot (152) corresponding to the slot (114) formed in the cooling plate (110).

8. A battery pack (10) comprising:
the pack case (100) according to any one of claims 1 to 7; and
a battery module (200) accommodated in each storing space divided longitudinally and transversely by the center frame (130) and side beam (140) of the pack case.

9. The battery pack (10) of claim 8, wherein
a thermal resin layer (210) is interposed at the contact surface between the battery module (200) and the cooling plate (110).

10. The battery pack (10) of claim 9, wherein
the thermal resin layer (210) does not encroach upon the slot (114).

## Patentansprüche

1. Packgehäuse (100), umfassend:
eine Kühlplatte (110), die auf der Innenseite mit einem Kühlströmungsweg (112) ausgestattet ist;
eine Seitenplatte (120), die so gekoppelt ist, dass sie eine Seitenwand am Rand der Kühlplatte (110) bildet;
einen Mittelrahmen (130), der mit der Kühlplatte (110) gekoppelt ist, um einen durch die Seitenplatte (120) gebildeten Aufnahmeraum in Längsrichtung zu unterteilen; und
einen Seitenträger (140), der mit der Kühlplatte (110) gekoppelt ist, um eine Vielzahl von durch den Mittelrahmen (130) unterteilten Räumen in Querrichtung zu unterteilen, wobei
die Kühlplatte (110) mit einem Schlitz (114) versehen ist, der durch Durchdringen entlang der Kopplungsposition des Mittelrahmens (130) oder des Seitenträgers (140) ausgebildet ist,
wobei eine Vielzahl der Schlitze (114) entlang der Kopplungsposition des Mittelrahmens (130) oder des Seitenträgers (140) voneinander beabstandet ist,
**dadurch gekennzeichnet, dass** ein Isoliermaterial (116) in den durch jeden Schlitz (114) gebildeten Raum gefüllt ist.

2. Packgehäuse (100) nach Anspruch 1, wobei
der Schlitz (114) durch Durchdringen entlang der Kopplungsposition des Mittelrahmens (130) und des Seitenträgers (140) ausgebildet ist.

3. Packgehäuse (100) nach Anspruch 1, wobei
der Schlitz (114) außerhalb des Mittelrahmens (130) und des Seitenträgers (140) nicht freiliegt.

4. Packgehäuse (100) nach Anspruch 1, wobei
die Kühlplatte (110) **dadurch gekennzeichnet ist, dass** der Kühlströmungsweg (112) und der Schlitz (114) einander nicht überlappen oder schneiden.

5. Packgehäuse (100) nach Anspruch 1, wobei
das Isoliermaterial (116) ein wasserdichtes Material ist.

6. Packgehäuse (100) nach Anspruch 1, ferner umfassend:
eine Bodenplatte (150), die mit der Unterseite der Kühlplatte (110) gekoppelt ist.

7. Packgehäuse (100) nach Anspruch 6, wobei
die Bodenplatte (150) mit einem Bodenschlitz (152) versehen ist, der dem in der Kühlplatte (110) ausgebildeten Schlitz (114) entspricht.

8. Batteriepack (10), umfassend:
das Packgehäuse (100) nach einem der Ansprüche 1 bis 7; und
ein Batteriemodul (200), das in jedem Aufnahmeraum aufgenommen ist, der durch den Mittelrahmen (130) und den Seitenträger (140) des Packgehäuses in Längs- und Querrichtung unterteilt ist.

9. Batteriepack (10) nach Anspruch 8, wobei
eine Wärmeleitharzschicht (210) an der Kontaktfläche zwischen dem Batteriemodul (200) und der Kühlplatte (110) angeordnet ist.

10. Batteriepack (10) nach Anspruch 9, wobei
die Wärmeleitharzschicht (210) nicht in den Schlitz (114) eindringt.

## Revendications

1. Un boîtier de bloc (100) comprenant :
une plaque de refroidissement (110) équipée d'un canal d'écoulement de refroidissement (112) à l'intérieur ;
une plaque latérale (120) couplée pour former une paroi latérale au niveau du bord de la plaque de refroidissement (110) ;
un cadre central (130) couplé à la plaque de refroidissement (110) pour diviser longitudinalement un espace de logement formé par la plaque latérale (120) ; et
une poutre latérale (140) couplée à la plaque de refroidissement (110) pour diviser transversalement une pluralité d'espaces divisés par le cadre central (130), dans lequel
la plaque de refroidissement (110) est pourvue d'une fente (114) formée par pénétration le long de la position de couplage du cadre central (130) ou de la poutre latérale (140),
dans lequel une pluralité des fentes (114) est espacée le long de la position de couplage du cadre central (130) ou de la poutre latérale (140),
**caractérisé en ce qu'**un matériau isolant (116) remplit l'espace formé par chaque fente (114).

2. Le boîtier de bloc (100) selon la revendication 1, dans lequel
la fente (114) est formée par pénétration le long de la position de couplage du cadre central (130) et de la poutre latérale (140).

3. Le boîtier de bloc (100) selon la revendication 1, dans lequel
la fente (114) n'est pas exposée à l'extérieur du cadre central (130) et de la poutre latérale (140).

4. Le boîtier de bloc (100) selon la revendication 1, dans lequel
la plaque de refroidissement (110) est **caractérisée en ce que** le canal d'écoulement de refroidissement (112) et la fente (114) ne se chevauchent pas ni ne se croisent.

5. Le boîtier de bloc (100) selon la revendication 1, dans lequel
le matériau isolant (116) est un matériau étanche à l'eau.

6. Le boîtier de bloc (100) selon la revendication 1, comprenant en outre :
une plaque de base (150) couplée à la surface inférieure de la plaque de refroidissement (110).

7. Le boîtier de bloc (100) selon la revendication 6, dans lequel
la plaque de base (150) est pourvue d'une fente de base (152) correspondant à la fente (114) formée dans la plaque de refroidissement (110).

8. Un bloc-batterie (10) comprenant :
le boîtier de bloc (100) selon l'une quelconque des revendications 1 à 7 ; et
un module de batterie (200) logé dans chaque espace de logement divisé longitudinalement et transversalement par le cadre central (130) et la poutre latérale (140) du boîtier de bloc.

9. Le bloc-batterie (10) selon la revendication 8, dans lequel
une couche de résine thermique (210) est interposée au niveau de la surface de contact entre le module de batterie (200) et la plaque de refroidissement (110).

10. Le bloc-batterie (10) selon la revendication 9, dans lequel
la couche de résine thermique (210) n'empiète pas sur la fente (114).
